(19) Europäisches Patentamt / European Patent Office / Office européen des brevets

(11) **EP 2 866 062 A1**

(12) **EUROPEAN PATENT APPLICATION**
published in accordance with Art. 153(4) EPC

(43) Date of publication:
**29.04.2015 Bulletin 2015/18**

(51) Int Cl.:
**G02B 1/10** (2015.01)    **B32B 27/20** (2006.01)

(21) Application number: **13807276.4**

(86) International application number:
**PCT/JP2013/066654**

(22) Date of filing: **18.06.2013**

(87) International publication number:
**WO 2013/191154 (27.12.2013 Gazette 2013/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.06.2012 JP 2012137025**

(71) Applicant: **HOYA LENS MANUFACTURING PHILIPPINES INC.**
**Cavite (PH)**

(72) Inventors:
- **SUGIHARA, Yousuke**
  **Tokyo 161-8525 (JP)**
- **HOSHINO, Yuta**
  **Tokyo 161-8525 (JP)**

(74) Representative: **Adam, Holger**
**Kraus & Weisert**
**Patentanwälte PartGmbB**
**Thomas-Wimmer-Ring 15**
**80539 München (DE)**

(54) **OPTICAL ARTICLE AND COATING LIQUID**

(57) An aspect of the present invention relates to an optical article, which comprises a plastic substrate, and a hard coat layer directly, or through another layer, on a surface of the plastic substrate, wherein the hard coat layer comprises a filler component comprising chain-like inorganic oxide microparticles, and in the hard coat layer, a content of the chain-like inorganic oxide microparticles is equal to or greater than 15 mass percent and a content of the filler component ranges from greater than 20 mass percent to less than 40 mass percent, and a layer thickness of the hard coat layer is equal to or greater than 8 $\mu$m but equal to or less than 15 $\mu$m.

Fig. 4

**EP 2 866 062 A1**

**Description**

Cross-reference to related applications

This application claims the benefit of priority to Japanese Patent Application No. 2012-137025 filed on June 18, 2012, which is expressly incorporated herein by reference in its entirety.

Technical field

The present invention relates to an optical article and a coating liquid.

Background Art

Plastic lenses are lighter than glass lenses; afford excellent molding, processing, and dyeing properties and the like; tend not to crack; and are highly safe. Thus, they have rapidly become widespread in the field of eyeglass lenses, the great majority of which now consist of plastic lenses. However, the surfaces of plastic lenses tend to scratch easily. As a result, a hard coat layer is generally formed on a plastic substrate in an attempt to enhance resistance to scratching.

When there is a large difference in the refractive index of the plastic substrate and that of the hard coat layer that is provided on it, an interference fringe will sometimes be generated. In contrast, there are optical articles with thick hard coat films of about 10 $\mu$m (see Japanese Unexamined Patent Publication (KOKAI) No. 2010-128423 or English language family members US2010/134752A1, U.S. Patent Application No. 8,077,405, US2012/287394A1 and U.S. Patent No. 8,432,624, which are expressly incorporated herein by reference in their entirety).

Summary of the Invention

Japanese Unexamined Patent Publication (KOKAI) No. 2010-128423 describes an optical article capable of exhibiting an effect whereby the interference fringe tends not to be prominent. However, thickening of the film increases the internal forces accompanying contraction during the curing reaction, resulting in problems such as the generation of cracks, deformation of the optical article, and layer separation.

An aspect of the present invention provides for an optical article in which the interference fringe tends not to be prominent, with little deformation and little cracking of the hard coat layer, and a coating liquid.

Means for solving problems

An aspect of the present invention provides for an optical article, which comprises a plastic substrate, and a hard coat layer directly, or through another layer, on a surface of the plastic substrate, wherein the hard coat layer comprises a filler component comprising chain-like inorganic oxide microparticles, and in the hard coat layer, a content of the chain-like inorganic oxide microparticles is equal to or greater than 15 mass percent and a content of the filler component ranges from greater than 20 mass percent to less than 40 mass percent, and a layer thickness of the hard coat layer is equal to or greater than 8 $\mu$m but equal to or less than 15 $\mu$m.

In the above configuration, it is possible to inhibit the generation of an interference fringe because the hard coat layer is thick, equal to or greater than 8 $\mu$m but equal to or less than 15 $\mu$m in thickness. Even when the thickness of the hard coat layer is increased, because a filler component in the form of chain-like (bead-like) inorganic oxide microparticles (also referred to as a "bead-like sol" hereinafter) comprising linked primary particles (particles) is contained in the hard coat layer, there is little cracking or deformation. That is, in the bead-like sol, primary particles are already linked in the coating liquid that is used to form the hard coat layer, the spacing between the particles tends not to decrease during curing, and as a result, there is little contraction in volume. Thus, overall volumetric contraction tends to decrease, making it possible to prevent cracking and/or deformation of the optical article. Further, the particles in the bead-like sol are firmly bound together, permitting a high degree of film strength from the start of the curing reaction in the hard coat layer.

A hard coat layer having a content of chain-like inorganic oxide microparticles of equal to or greater than 15 mass percent and a content of the above filler component exceeding 20 mass percent can afford excellent scratching resistance and a high degree of hardness. Limiting the component of the filler component to less than 40 mass percent can prevent cracking of the hard coat layer and deformation of the optical article on which the hard coat layer has been formed.

In an embodiment, the filler component further comprises spherical inorganic oxide microparticles.

In the above configuration, the hard coat layer further comprises spherical inorganic microparticles (also referred to as a "spherical sol" hereinafter). As a result, the structure is one in which the spherical sol enters the voids in the bead-like sol in the hard coat layer, making it possible to provide an optical article with both extremely good scratching resistance and cracking resistance.

In an embodiment, the optical article is an eyeglass lens.

By means of the above configuration, it is possible to provide an eyeglass lens in which interference fringes are not prominent and in which there is little deformation and/or hard coat layer cracking.

A further aspect of the present invention relates to a coating liquid, which comprises a filler component comprising chain-like inorganic oxide microparticles, and a binder component, wherein relative to a total solid component of the coating liquid, a mass ratio of the chain-like inorganic oxide microparticles is equal to or greater than 15 percent and a mass ratio of the filler component is greater than 20 percent but is less than 40 percent.

The above configuration makes it possible to inhibit the formation of an interference fringe when forming a hard coat layer of equal to or greater than 8 $\mu$m in thickness, for example. Even when the thickness of the hard coat layer is increased, the fact that the hard coat layer contains a filler component comprising a prescribed quantity of chain-like (bead-like) bead-like sol in which primary particles (particles) are linked reduces cracking and/or deformation. That is, in the bead-like sol, the primary particles are already linked in the coating liquid used to form the hard coat layer, making it difficult for the distance between the particles to decrease during curing. As a result, it is possible to reduce volumetric contraction. Thus, the overall rate of volumetric contraction decreases, preventing the generation of cracks and the deformation of the optical article. Further, the particles in the bead-like sol are firmly bound together, making it possible to achieve high film strength from the start of the curing reaction of the hard coat layer.

In the present aspect, when the mass ratio of the chain-like inorganic oxide microparticles to the total solid component of the coating liquid is equal to or greater than 15 percent and the mass ratio of the filler component exceeds 20 percent, the hardness and scratching resistance of the hard coat layer that is formed with the coating liquid become adequate. When the mass ratio of the filler component is less than 40 percent, it is possible to prevent cracking of the hard coat layer that is formed from the coating liquid and/or deformation of the optical article.

In an embodiment, the coating liquid further comprises spherical inorganic oxide microparticles.

In the above configuration, since a spherical sol is further contained in the coating liquid, the structure is one in one the spherical sol enters into voids in the bead-like sol in the hard coat layer, yielding an optical article with both extremely good scratching resistance and cracking resistance.

In an embodiment, the coating liquid is a hard coating liquid for an eyeglass lens.

Brief Description of Drawings

[Fig. 1] Fig. 1 is a sectional view of the main parts of an optical article relating to one implementation mode of the present invention.

[Fig. 2] Fig. 2 is a schematic drawing showing the bead-like sol dispersed in the coating liquid in an implementation mode of the present invention.

[Fig. 3] Fig. 3 is a schematic drawing showing a spherical sol dispersed in the coating liquid in an implementation mode of the present invention.

[Fig. 4] Fig. 4 is a schematic drawing showing a bead-like sol and a spherical sol dispersed in the coating liquid in an implementation mode of the present invention.

Modes of Carrying Out the Invention

An implementation mode of the present invention will be described below. The optical article in the present implementation mode is an eyeglass lens (plastic eyeglass lens).

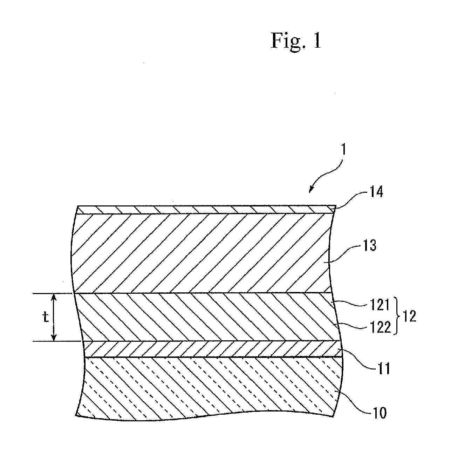

Fig. 1 is a sectional view of the main parts of an optical article relating to an implementation mode of the present invention.

In Fig. 1, plastic eyeglass lens 1 of the present implementation mode is equipped with a plastic substrate 10, a primer layer 11 provided on the surface of plastic substrate 10, a hard coat layer 12 provided on the surface of primer layer 11, an antireflective layer 13 provided on the surface of hard coat layer 12, and an antifouling layer 14 provided on the surface of antireflective layer 13. In the present implementation mode, any portion, or all of, primer layer 11, antireflective layer 13, and antifouling layer 14 can be omitted.

(1. Plastic substrate)

Plastic substrate 10 is not specifically limited beyond being comprised of plastic resin. From the perspective of reducing the thickness of the eyeglass lens, a refractive index of equal to or higher than 1.6, desirably equal to or higher than 1.65, and preferably equal to or higher than 1.7, can be employed.

By way of example, transparent plastics in the form of (meth)acrylic resins, thiourethane resins, allyl resins, episulfide resins, polycarbonate resins, polystyrene resins, diethylene glycol bisallyl carbonate resin (CR-39), polyvinyl chloride resins, and halogen-containing copolymers can be employed as the plastic substrate.

In particular, allyl carbonate resins, acrylate resins, methacrylate resins, thiourethane resins, and episulfide resins are desirable. Of these, the thiourethane resins and episulfide resins are preferred from the perspective of high refractive indexes.

(2. Hard coat layer)

The layer thickness (film thickness) t of hard coat layer 12 is 8 $\mu$m $\leq$ t $\leq$15 $\mu$m.

Hard coat layer 12 is formed from a coating liquid containing a filler component comprising a bead-like sol and a binder component.

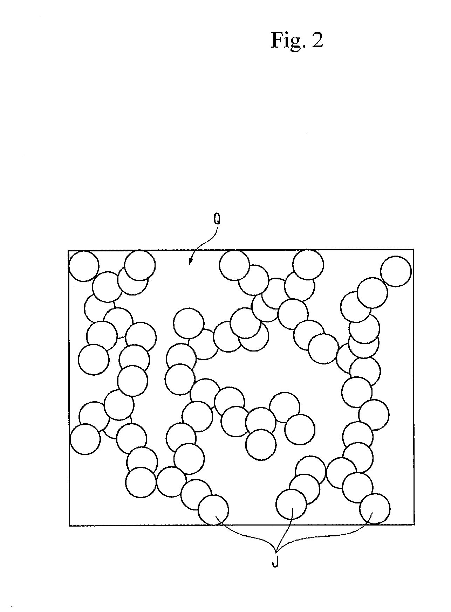

Fig. 2 shows the bead-like sol dispersed in the coating liquid.

As shown in Fig. 2, bead-like sol J is dispersed in coating liquid Q along with a binder component. Bead-like sol J refers to a sol in which several to several tens of spherical primary particles comprised of inorganic oxide are linked by means of chemical bonds to render them bead-like (chain-like). They can be in a linearly extending form, or in a two-dimensionally or three-dimensionally curving form. Branching can also be present along the chain. Thus, voids are produced in bead-like sol J.

In the present implementation mode, a spherical sol K can be contained in addition to bead-like sol J as a filler component.

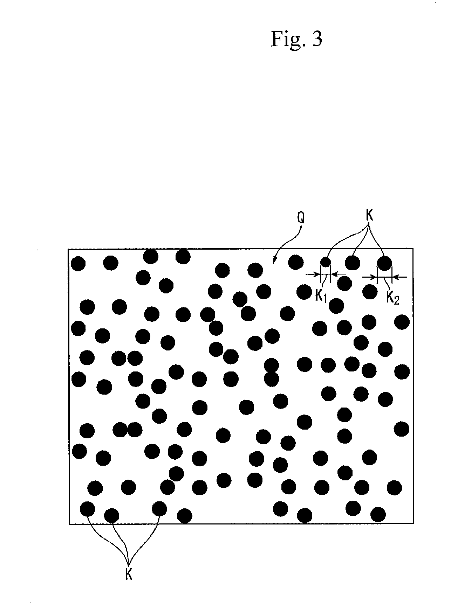

Figure 3 shows a spherical sol dispersed in a coating liquid.

In Fig. 3, spherical sol K dispersed in coating liquid Q is comprised of spherical inorganic oxide microparticles. The degree of spherical shape, sphericity (the value of the shortest diameter $K_1$ of the particle divided by the longest diameter $K_2$ thereof $K_1 K_2$) is desirably equal to or greater than 0.8, and preferably equal to or greater than 0.9. The sphericity (arithmetic average) is obtained by observation under an electron microscope. In the case of a fully spherical shape, the sphericity becomes 1. Accordingly, the sphericity of the spherical sol is desirably equal to or greater than 0.8 but equal to or less than 1, preferably equal to or greater than 0.9 but equal to or less than 1.

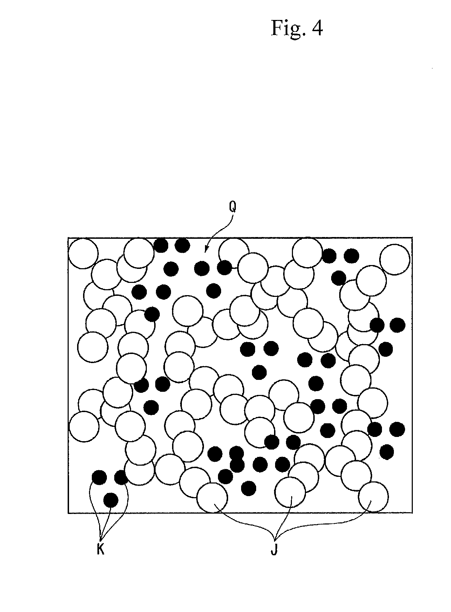

Fig. 4 shows a bead-like sol and a spherical sol dispersed in a coating liquid.

When bead-like sol J and spherical sol K are dispersed in coating liquid Q, the structure becomes one in which spherical sol K enters into the voids in bead-like sol J.

Following the formation of hard coat layer 12, the various microparticles are similarly dispersed in the hard coat layer.

(2.1 Bead-like sol)

The inorganic oxide constituting bead-like sol J is not specifically limited. Examples are silicon oxide ($SiO_2$), titanium oxide ($TiO_2$), aluminum oxide ($Al_2O_3$), tin oxide ($SnO_2$), calcium carbonate ($CaCO_3$), barium sulfate ($BaSO_4$), and calcium sulfate ($CaSO_4$). Of these inorganic oxides, silicon oxide is desirably employed from the perspective of the effect of the present invention. In a bead-like sol comprised of silicon oxide, the various primary particles are thought to be linked by siloxane bonds.

In such inorganic oxide microparticles (primary particles) comprised of bead-like sol J, the average particle diameter is desirably equal to or greater than 5 nm but equal to or less than 70 nm, preferably equal to or greater than 10 nm but equal to or less than 60 nm, and more preferably, equal to or greater than 10 nm but equal to or less than 50 nm.

When the average particle diameter of the primary particles is equal to or greater than 5 nm, it is possible to achieve adequate scratching resistance and cracking resistance. When the average particle diameter of the primary particles is equal to or less than 70 nm, good optical characteristics can be achieved.

The average primary particle diameter of the inorganic oxide microparticles constituting bead-like sol J can be measured by the BET method or by an electron microscope.

With the BET method, molecules with a known occupying area, such as nitrogen gas, are adhered to the surface of the particles, the specific surface area is determined from the relation between the quantity adsorbed and the pressure, and the average primary particle diameter is obtained by converting this specific surface area into a particle diameter with a conversion table.

With an electron microscope, bead-like sol is first scooped from a dispersion (sol) on copper mesh on which an amorphous carbon film has been formed to a thickness of several tens of nm, or bead-like sol is caused to adhere to an amorphous carbon film. The microparticles are then observed with a transmission electron microscope to measure the average primary particle diameter.

The average particle diameter of the bead-like sol as a whole (secondary particles) is determined by dynamic optical scattering. The average particle diameter is desirably equal to or greater than 20 nm but equal to or less than 200 nm. When the average particle diameter of the secondary particles is equal to or greater than 20 nm, adequate scratching resistance and/or cracking resistance can be achieved. When the average particle diameter of the secondary particles is equal to or less than 200 nm, good optical characteristics can be achieved.

Bead-like sols having a structure in which primary particles in the form of inorganic oxide microparticles are linked are commercially available as liquid sols. Examples are "Snowtex-OUP" (Snowtex is a registered trademark), "Snowtex-UP," "IPA-ST-UP," "Snowtex PS-M," "Snowtex PS-MO," Snowtext PS-S," and "Snowtext PS-SO" made by Nissan Chemical Industries, Ltd.; "Fine Catalloid F-120" ("Catalloid" is a registered trademark) made by Shokubai Kasei Kogyo K.K.; and "Quartron PL" ("Quartron" is a registered trademark) made by Fuso Chemical Co.. Ltd. In these bead-like sols, primary particles comprised of silicon oxide have a three-dimensionally curved structure with multiple bonds.

The hard coat layer comprises a filler component containing at least the chain-like inorganic oxide microparticles set forth above. The content of chain-like inorganic oxide microparticles in the hard coat layer is equal to or greater than 15 mass percent, and the content of the filler component falls within a range of greater than 20 mass percent but less than 40 mass percent. In a hard coat layer containing equal to or greater than 15 mass percent of chain-like inorganic oxide microparticles and greater than 20 mass percent of filler component, adequate hardness and scratching resistance can be achieved. The filler component can be just the chain-like inorganic oxide microparticles, or can contain another filler component in addition to the chain-like inorganic oxide microparticles. The content of the filler component set forth above indicates the total quantity of filler component. Accordingly, when the filler component consists of just the chain-like inorganic oxide microparticles, the content of the chain-like inorganic oxide microparticles becomes greater than 20 mass percent but less than 40 mass percent. When the filler component contains both chain-like inorganic oxide microparticles and another filler component, the incorporation of equal to or greater than 15 mass percent of chain-like inorganic oxide microparticles into the hard coat layer can yield a hard coat layer of adequate hardness. The spherical inorganic oxide microparticles set forth further below are suitable as another filler component.

Keeping the content of filler component to less than 40 mass percent can prevent cracking of the hard coat layer and/or deformation of the optical article having a hard coat layer.

As set forth above, the content of chain-like inorganic oxide microparticles in the hard coat layer is equal to or greater than 15 mass percent. When another filler component is incorporated along with the chain-like inorganic oxide microparticles as a filler component, the content of chain-like inorganic oxide microparticles in the hard coat layer is desirably equal to or less than 35 mass percent, preferably equal to or less than 30 mass percent.

(2.2 Spherical sol)

Various microparticles such as silicon oxide ($SiO_2$), titanium oxide ($TiO_2$), aluminum oxide ($Al_2O_3$), tin oxide ($SnO_2$), calcium carbonate ($CaCO_3$), barium sulfate ($BaSO_4$), and calcium sulfate ($CaSO_4$) are examples of spherical sol K. These particles are desirably colloidal particles. Of these, from the perspective of the effect achieved, microparticles comprised of silicon oxide are desirable. From the perspective of the effect achieved, colloidal silica is preferred. Colloidal silica is commercially available in the form of liquid sols such as "IPA-ST" made by Nippon Chemical and "Ludox AM" made by Grace ("Ludox" is a registered trademark).

The average particle diameter of spherical sol K is desirably equal to or greater than 10 nm but less than 30 nm, preferably equal to or greater than 10 nm but equal to or less than 20 nm. When the average particle diameter is equal to or greater than 10 nm, adequate scratching resistance can be achieved. When the average particle diameter is less than 30 nm, the spherical sol can readily enter into the voids in the bead-like sol.

The average particle diameter of spherical sol K can be measured by the dynamic scattering method or by electron microscopy.

(2.3 Binder component)

The binder component in coating liquid Q is a medium for dispersing bead-like sol J and/or spherical sol K in hard coat layer 12.

Compounds known as silane coupling agents are suitable as such binder components. In particular, the organic silicon compounds denoted by formula (1) below are desirable:

$$R^1 R^2 nSiX^1_{3-n} \qquad (1)$$

(where $R^1$ denotes an organic group having a polymerizable reactive group, $R_2$ denotes a hydrocarbon group with from 1 to 6 carbon atoms, $X^1$ denotes a hydrolyzable group, and n denotes 0 or 1).

Examples of the organic silicon compound of formula (1) are: vinyl trialkoxy silane, vinyl trichlorosilane, vinyl tri(β-methoxyethoxy)silane, allyl trialkoxysilane, acryloxypropyltrialkoxysilane, methacryloxypropyltrialkoxysilane, β-(3,4-epoxycyclohexyl)-ethyltrialkoxysilane, mercaptopropyltrialkoxysilane, γ-aminopropyltrialkoxysilane, γ-glycidoxypropyltrialkoxysilane, γ-glycidoxypropylalkyldialkoxysilane, and γ-glycidoxypropyltrimethoxysilane (GTS). Two or more of these organic silicon compounds can be mixed for use. The same effect can be achieved when using a tetrafunctional organic silicon compound denoted by the general formula $SiX_4$ (where X denotes an alkoxyl group) such as tetramethoxysilane and tetraethoxysilane.

When preparing a coating liquid Q (hard coat liquid) containing above-described bead-like sol J, spherical sol K, and an organic silicon compound, it is desirable to mix the sols in which the various microparticles have been dispersed and the organic silicon compound.

In coating liquid Q, the mass ratio (J:K) of bead-like sol (J) to spherical inorganic oxide microparticles (K) desirably falls within a range of 90:10 to 10:90, preferably with a range of 80:20 to 30:70, and more preferably, with a range of 80:20 to 50:50. Within this range, it is possible to provide a hard coat layer 12 with an extremely good balance between scratching resistance and cracking resistance.

The ratio F (filler total fill ratio), which is the mass ratio of the filler containing bead-like sol J and spherical sol K to the total solid component of coating liquid Q, is 20 percent < F < 40 percent, desirably 30 percent ≤ F ≤ 35 percent. For example, when the solid component of the coating liquid is comprised of the three components of bead-like sol, spherical sol, and binder component, the filler total fill ratio is calculated as:

$$\text{Filler total fill ratio F} = ((\text{quantity of bead-like sol} + \text{quantity of spherical sol})/(\text{quantity of bead-like sol} + \text{quantity of spherical sol} + \text{quantity of binder component})) \times 100$$

When the filler total fill ratio falls within the above range, it is possible to provide a hard coat layer 12 in which scratching resistance and cracking resistance are well balanced. When the proportion of the total quantity of filler component is excessively small, the scratching resistance and/or refractive index of hard coat layer 12 become inadequate. Conversely, when the proportion of the total quantity of the filler component is excessive, there may be a risk of cracks developing in hard coat layer 12. The filler total fill ratio can be determined based on the hardness and refractive index of the desired hard coat layer 12 within the above-stated range.

It is extremely useful for hard coat layer 12 to contain multifunctional epoxy compounds in addition to the various above microparticles and organic silicon compound. Multifunctional epoxy compounds can enhance the adhesion of the hard coat layer 12 to plastic substrate 10 or primer layer 11, as well as enhance the water repellence of hard coat layer 12 and the shock resistance as a plastic lens. Examples of multifunctional epoxy compounds are 1,6-hexanediol diglycidyl ether, ethyleneglycol diglycidyl ether, and other aliphatic epoxy compounds; isophoronediol diglycidyl ether, bis-2,2-hydroxycyclohexylpropanediglycidyl ether, and other alicyclic epoxy compounds, and resorcin diglycidyl ether, bisphenol A glycidyl ether, cresol novolak polyglycidyl ether, and other aromatic epoxy compounds.

The above organic silicon compounds can be used to form dense layers by hydrolysis and dehydration concentration. A curing catalyst can also be added to the coating liquid. Examples of curing catalysts are perchloric acids such as perchloric acid, ammonium perchlorate, and magnesium perchlorate; acetyl acetonates with Cu (II), Zn (II), Co (II), Ni (II), Be (II), Ce (III), Ta (III), Ti (III), Mn (III), La (III), Cr (III), V (III), Co (III), Fe (III), Al (III), Ce (IV), Zr (IV), or V (IV) as the central metal atom; amines; amino acids such as glycine; Lewis acids; and organic acid metal salts.

The coating liquid for forming a hard coat layer that is obtained in this manner can be diluted with a solvent for use as needed. Alcohols, esters, ketones, ethers, aromatic solvents, and the like can be employed as the solvent. Small quantities of metal chelate compounds, surfactants, antistatic agents, UV-absorbing agents, oxidation-inhibiting agents, dispersible dyes, oil-soluble dyes, pigments, photochromic compounds, and light and heat stabilizing agents such as hindered amines and hindered phenols can be added as needed to the coating liquid for forming the hard coat layer. Addition thereof can enhance the coating property, curing rate, and coating performance following curing of the coating liquid.

Coating liquid Q can be coated and cured by dipping, spin coating, spray coating, or roll coating. Alternatively, the coating liquid can be applied to the surface of a plastic substrate by the flow coating method, and then heated and dried for several hours at a temperature of 40°C to 200°C to form hard coat layer 12.

(3. Antireflective layer)

To prevent light from reflecting off of the eyeglass lens surface, an antireflective layer 13 can be formed. Antireflective layer 13 desirably has a refractive index that is at least 0.1 lower than the refractive index of hard coat layer 12. The layer thickness of antireflective layer 13 is desirably about equal to or greater than 50 nm but about equal to or less than 150 nm. Such an antireflective layer 13 is generally comprised of single or multiple inorganic thin layers and organic thin layers.

Examples of the materials used in the inorganic thin layer are $SiO_2$, $SiO$, $ZrO_2$, $TiO_2$, $TiO$, $Ti_2O_3$, $Ti_2O_5$, $Al_2O_3$, $Ta_2O_5$, $CeO_2$, $MgO$, $Y_2O_3$, $SnO_2$, $MgF_2$, and $WO_3$. In the case of a plastic substrate, $SiO_2$, $ZrO_2$, $TiO_2$, and $Ta_2O_5$ are desirable because they can be vacuum deposited at low temperature. When antireflective layer 13 is comprised of inorganic thin layers, an antireflective effect is achieved by depositing low-refractive index layers and high-refractive index layers in alternating fashion in a multilayer structure. In that case, the material of the outermost layer is desirably $SiO_2$, which has a low refractive index.

The method of forming the inorganic thin layers can be, for example, vacuum deposition, ion plating, sputtering, CVD, or precipitation by chemical reaction in a saturated solution. Among the vacuum deposition methods, an ion beam-assisted method in which an ion beam is simultaneously irradiated during deposition can be employed.

(4. Primer layer)

Primer layer 11 is present at the interface between plastic substrate 10 and hard coat layer 12. It has the property of adhering to both plastic substrate 10 and hard coat layer 12, and serves the role of enhancing the overall durability of the surface-treatment film. It also has the property of serving as a layer that absorbs external shock and enhancing shock resistance. It is desirable to employ a coating composition comprising a polar organic resin polymer and metal oxide microparticles containing titanium oxide to form such a primer layer 11. The refractive index of primer layer 11 is desirably designed in line with the refractive index of plastic substrate 10 to avoid the generation of an interference fringe.

(5. Antifouling layer)

Antifouling layer 14 can be formed with a fluorine-containing organic silicon compound over antireflective layer 13 to enhance the water-repelling performance and the oil-repelling performance of the plastic lens surface.

EXAMPLES

Examples of the present invention will be described next. However, the present invention is not limited to Examples set forth below. Modifications, improvements, and the like fall within the scope of the present invention to the extent that they achieve the object of the present invention.

[Example 1]

A hard coat liquid was prepared using just a bead-like sol (IPA-ST-UP, made by Nissan Chemical) comprised of $SiO_2$ as the filler component and using $\gamma$-glycidoxypropyltrimethoxysilane (GTS) as the binder component. The mass ratio of the filler component to the total hard coat liquid (filler total fill ratio) was 30 percent and the mass ratio of the binder component was 70 percent.

The hard coat liquid prepared by this process was coated on a plastic substrate 10 with an ultrasonic spray coating device ("ExactaCoat," made by Sono-tech Corp.). Specifically, one surface of plastic substrate 10 was first coated with the hard coat liquid using the ultrasonic spray coating device while positioned facing upward relative to the direction in which gravity is exerted. Next, plastic substrate 10 was turned over and the hard coat liquid was applied in the same manner with the other side thereof facing upward. Heating was applied under conditions of 100°C x 180 minutes and the coatings were dried to form a hard coat layer 12 to a layer thickness t of 8 $\mu$m on plastic substrate 10. Plastic substrate 10 is not specifically limited. A Seiko luscious substrate (refractive index 1.60) made by Seiko Optical Products (Ltd.) was employed in Example 1.

[Example 2]

With the exception that the layer thickness t of hard coat layer 12 was changed to 15 $\mu$m, the same process was carried out as in Example 1.

[Example 3]

A hard coat liquid was prepared using a bead-like sol (IPA-ST-UP made by Nissan Chemical) comprised of $SiO_2$ and a spherical sol (IPA-ST made by Nissan Chemical, particle diameter 10 nm) as the filler component and using $\gamma$-glycidoxypropyltrimethoxysilane (GTS) as the binder component. The mass ratios of the $SiO_2$ bead-like sol, spherical sol, and GTS were 17.5 percent, 17.5 percent, and 65 percent, respectively. The mass ratio of the filler component to the total hard coat liquid (filler total fill ratio) was 35 percent (= 17.5 percent + 17.5 percent).

The hard coat liquid that had been prepared was applied to plastic substrate 10 to form a hard coat layer 12. The layer thickness t of hard coat layer 12 was 8 μm, as in Example 1.

[Example 4]

With the exceptions that the mass ratios of the $SiO_2$ bead-like sol, spherical sol, and GTS were changed to 15 percent, 15 percent, and 70 percent, respectively, the same conditions were employed as in Example 3. The mass ratio of the filler component to the total hard coat liquid (filler total fill ratio) was 30 percent (= 15 percent + 15 percent).
The layer thickness t of hard coat layer 12 was 8 μm, as in Example 1.

[Comparative Example 1]

With the exception that the layer thickness t of hard coat layer 12 was changed to 5 μm, the same process was employed as in Example 1.

[Comparative Example 2]

With the exception that the layer thickness t of hard coat layer 12 was changed to 25 μm, the same process was employed as in Example 1.

[Comparative Example 3]

With the exception that a mass ratio of 30 percent spherical sol (IPA-ST made by Nissan Chemical, particle diameter 10 nm) was employed instead of the $SiO_2$ bead-like sol, the same conditions were employed as in Example 1. The mass ratio of the filler component to the total hard coat liquid (filler total fill ratio) was 30 percent.
The layer thickness t of hard coat layer 12 was 8 μm, as in Example 1.

[Comparative Example 4]

With the exception that a spherical sol (IPA-ST made by Nissan Chemical, particle diameter 10 nm) was employed instead of the $SiO_2$ bead-like sol, the same conditions were employed as in Example 2. The mass ratio of the filler component to the total hard coat liquid (filler total fill ratio) was 30 percent.
The thickness t of hard coat layer 12 was 15 μm, as in Example 2.

[Comparative Example 5]

With the exceptions that the mass ratios of $SiO_2$ bead-like sol, spherical sol, and binder component were changed to 20 percent, 20 percent, and 60 percent, respectively, the same conditions were employed as in Example 2.
The mass ratio of the filler component relative to the total hard coat liquid (filler total fill ratio) was 40 percent (= 20 percent + 20 percent).
The layer thickness t of hard coat layer 12 was 15 μm, as in Example 2.

[Comparative Example 6]

With the exceptions that the mass ratios of $SiO_2$ bead-like sol, spherical sol, and binder component were changed to 10 percent, 10 percent, and 80 percent, respectively, the same conditions were employed as in Example 2.
The mass ratio of the filler component relative to the total hard coat liquid (filler total fill ratio) was 20 percent (= 10 percent + 10 percent).
The layer thickness t of hard coat layer 12 was 15 μm, as in Example 2.

[Comparative Example 7]

With the exception that layer thickness t was changed to 18 μm, the same conditions were employed as in Example 1.

[Comparative Example 8]

With the exceptions that the mass ratios of $SiO_2$ bead-like sol, spherical sol, and binder component were changed to 12.5 percent, 12.5 percent, and 75 percent, respectively, the same conditions were employed as in Example 3.

The mass ratio of the filler component relative to the total hard coat liquid (filler total fill ratio) was 25 percent (= 12.5 percent + 12.5 percent).

The layer thickness t of hard coat layer 12 was 8 μm, as in Example 3.

The configurations of Examples 1 to 4 and Comparative Examples 1 to 8 are given in Table 1.

[Table 1]

|  | Fill ratio of bead-like sol | Fill ratio of spherical sol | Filler total fill ratio | Layer thickness t |
|---|---|---|---|---|
| Ex. 1 | 30% | 0% | 30% | 8μm |
| Ex. 2 | 30% | 0% | 30% | 15μm |
| Ex. 3 | 17.5% | 17.5% | 35% | 8μm |
| Ex. 4 | 15% | 15% | 30% | 8μm |
| Comp.Ex. 1 | 30% | 0% | 30% | 5μm |
| Comp.Ex. 2 | 30% | 0% | 30% | 25μm |
| Comp.Ex. 3 | 0% | 30% | 30% | 8μm |
| Comp.Ex. 4 | 0% | 30% | 30% | 15μm |
| Comp.Ex. 5 | 20% | 20% | 40% | 15μm |
| Comp.Ex. 6 | 10% | 10% | 20% | 15μm |
| Comp.Ex. 7 | 30% | 0% | 30% | 18μm |
| Comp.Ex. 8 | 12.5% | 12.5% | 25% | 8μm |

[Evaluation methods]

(I) Interference fringe: The interference fringes of the samples of Examples and Comparative Examples were observed under three wavelength fluorescent lamps in a dark box, and evaluated as follows:

○: A good level, with almost no interference fringe being observed

Δ: A somewhat unsightly level, with the generation of an interference fringe

X: An unsightly level, with the generation of a severe interference fringe

(II) Bayer test characteristic (scratching resistance property):

A Bayer test apparatus made by COLTS Laboratories was employed to conduct a Bayer test by simultaneously scratching samples of Examples and Comparative Examples prepared as set forth above by passing them back and forth 600 times over a medium with a mass of 500 g (the standard conditions specified by COLTS Laboratories). The haze value of the scratched samples was measured (with an automated haze computer made by Suga Test Instruments Co., Ltd.) and the Bayer ratio R was calculated from the ratio of the change in the haze values of the samples of Examples and Comparative Examples to the haze value of a reference sample based on the following equation:

$$R = |H_{ST1} - H_{ST0}| / |H_{SA1} - H_{SA0}|$$

In the equation: H: haze value; ST: reference sample; SA: Embodiment and Comparative Example samples; 0: before test; 1: after test.

The larger the value of R, the better the resistance to scratching.

Measurements was conducted on three each of Example and Comparative Example samples and reference samples, R was calculated, and the average value was adopted as the measurement value. The various test products were then evaluated on the following scale:

◎: R ≥ 3    Superior product
○: 2 ≤ R < 3    Suitable product
Δ: 1 ≤ R < 2    No problem for use as a product
X: R < 1    Unsuitable as product

The reference sample was an uncoated ADC resin lens (just plastic substrate).

(III) Mohs test characteristic (hardness of hard coat layer)

The Mohs hardness is an evaluation standard using the set of 10 types of stone (polishing members) of differing hardness that is used in Mohs hardness evaluation and conducting a rubbing test. The Mohs test characteristic refers to preparing 10 types of stone of differing hardness, rubbing polishing members comprised of these stones against the lens surface, and visually determining whether scratches are formed. The ten types of stone are as follows: no. 1 is talc, no. 2 is gypsum, no. 3 is calcite, no. 4 is fluorite, no. 5 is apatite, no. 6 is orthoclase, no. 7 is quartz, no. 8 is topaz, no. 9 is corundum, and no. 10 is diamond. The hardness rises as the number increases.

The contact surface with the polishing members comprised of these stones was made 1.0 mm x 1.0 mm. The polishing member was brought into contact with the surface of the sample of Example or Comparative Example, a mass of 500 gf (about 4.90332 N) was applied, and from 1 to 5 back and forth passes were made to conduct a scratch test of the film surface. The scratch rate was 15 mm/s.

The Mohs test evaluation was conducted as follows. For example, a polishing member comprised of fluorite corresponding to a Mohs hardness of 4 was brought into contact with the lens surface, a scratch test was conducted, and a visual check was made to determine that the surface layer portion of the sample had separated or shaved powder had been produced. The sample surface was then brought into contact with a polishing member comprised of calcite corresponding to a Mohs hardness of 3 and a scratch test was conducted. A visual inspection revealed that the surface portion had not separated and no shaved powder had been produced, so a Mohs hardness of 3.5 was assigned. Similarly, a polishing member comprised of calcite corresponding to a Mohs hardness of 3 was brought into contact with the sample surface and a scratch test was conducted. The fact that scratches were imparted was visually determined. A polishing member comprised of gypsum corresponding to a Mohs hardness of 2 was then brought into contact with the sample surface and a scratch test was conducted. A visual inspection revealed that the surface portion had not been scratched, so a Mohs hardness of 2.5 was assigned. A Mohs test characteristic of 3.5 was adequate hardness for hard coat layer 12. However, a hard coat layer 12 with a hardness of 2.5 was deemed not to be a suitable product.

(IV) Evaluation of appearance: visual evaluation

[Cracking]

Absent:    No cracking was observed on the surface of the sample
Present:    Noticeable cracking was observed on the surface of the sample [Deformation]
Absent:    No deformation was observed
Present:    Noticeable deformation was observed

[Evaluation results]

The evaluation results for Examples 1 to 4 and Comparative Examples 1 to 8 are given in Table 2.

[Table 2]

|  | Interference fringe | Bayer test characteristic | Mohs test characteristic | Cracking | Reformation |
|---|---|---|---|---|---|
| Ex. 1 | ○ | ○ | 3.5 | Absent | Absent |
| Ex. 2 | ○ | ○ | 3.5 | Absent | Absent |
| Ex. 3 | ○ | ◎ | 3.5 | Absent | Absent |
| Ex. 4 | ○ | ○ | 3.5 | Absent | Absent |
| Comp.Ex. 1 | × | ○ | 2.5 | Absent | Absent |

(continued)

| | Interference fringe | Bayer test characteristic | Mohs test characteristic | Cracking | Reformation |
|---|---|---|---|---|---|
| Comp.Ex. 2 | ○ | ◎ | 3.5 | Present | Present |
| Comp.Ex. 3 | ○ | ○ | 3.5 | Present | Present |
| Comp.Ex. 4 | ○ | × | 2.5 | Absent | Absent |
| Comp.Ex. 5 | ○ | ○ | 3.5 | Present | Present |
| Comp.Ex. 6 | ○ | × | 3.5 | Absent | Absent |
| Comp.Ex. 7 | ○ | ◎ | 3.5 | Present | Absent |
| Comp.Ex. 8 | ○ | × | 3.5 | Absent | Absent |

Verification of Examples 1 to 4 and Comparative Examples 1 to 8 revealed the following. Examples 1 to 4, in which the layer thickness t of hard coat layer 12 was 8 $\mu$m or 15 $\mu$m, exhibited no interference fringes, cracking, or deformation. However, Comparative Example 1, in which the layer thickness t was 5 $\mu$m, exhibited an interference fringe. Comparative Example 2, in which layer thickness t was 25 $\mu$m, exhibited cracking and deformation. And Comparative Example 7, in which layer thickness t was 18 $\mu$m, exhibited cracking.

For an identical layer thickness t of hard coat layer 12 of 8 $\mu$m, Example 1, in which 30 percent of $SiO_2$ bead-like sol was filled as a filler component, exhibited no cracking or deformation, while Comparative Example 3, which was filled with 30 percent spherical sol, exhibited both cracking and deformation. For an identical layer thickness t of 15 $\mu$m, Example 2, which was 30 percent filled with a filler component in the form of an $SiO_2$ bead-like sol, exhibited desirable values for both the Bayer test characteristic and the Mohs test characteristic, which are standards for lens hardness, while Comparative Example 4, which was 30 percent filled with spherical sol, exhibited poorer evaluation results than Example 2 for both the Bayer test characteristic and Mohs test characteristic.

Example 3, which had a filler total fill rate of 35 percent, exhibited a desirable Bayer test characteristic without cracking or deformation. However, Comparative Example 5, which had a filler total fill rate of 40 percent, which was greater than that of Example 3, exhibited cracking and deformation despite a desirable value for the Bayer test characteristic. Examples 1, 2, and 4, which had filler total fill rates of 30 percent, exhibited desirable Bayer test characteristic values. However, Comparative Example 6, which was lower than Examples 1, 2, and 4, at 20 percent, and Comparative Example 8, which had a bead-like sol fill rate of 12.5 percent, exhibited Bayer test characteristics that were lower than those of Examples 1, 2, and 4.

Example 3 had a higher filler total fill rate than Example 4, and thus exhibited a better Bayer test characteristic.

Accordingly, the present implementation modes exhibited the following effects:

(1) The providing on a plastic substrate 10 of a hard coat layer 12 in which the ratio of the filler component relative to the total coating liquid formed a coating liquid containing a filler component comprising a bead-like sol J and a binder component (filler total fill ratio) exceeded 20 percent and was less than 40 percent, to a layer thickness t of equal to or greater than 8 $\mu$m but equal to or less than 15 $\mu$m, can inhibit the generation of interference fringes and can yield a product with little cracking or deformation and with a good Bayer test characteristic and Mohs test characteristic.

(2) Adopting a configuration further comprising spherical sol K in addition to bead-like sol J in the coating liquid can result in a structure in which the spherical sol entered into the voids in the bead-like sol and can enhance scratching resistance and cracking resistance.

(3) When the fill rate of the bead-like sol is made equal to or greater than 15 percent and the filler total fill rate is raised to within a range of greater than 20 percent but less than 40 percent, the Bayer test characteristic can be enhanced.

(4) Use of plastic substrate 10 as a plastic eyeglass substrate makes it possible to provide a suitable plastic eyeglass in which interference fringes tend not to be prominent and there is little cracking or deformation.

The present invention is not limited to the implementation modes set forth above, and includes the modifications indicated below to the extent that the object of the present invention can be achieved.

For example, in the above implementation modes, a plastic eyeglass lens is described as the optical article. However, the optical article of the present invention is not limited to plastic eyeglass lenses. For example, application to telescope lenses is also possible.

Explanation of symbols

1: Plastic eyeglass lens (optical article); 10: plastic substrate; 11: primer layer; 12: hard coat layer; 13: antireflective film; 14: antifouling layer; J: chain-like inorganic oxide microparticles (bead-like sol); K: spherical inorganic oxide microparticles (spherical sol); Q: coating liquid; t: layer thickness.

**Claims**

1. An optical article, which comprises:

   a plastic substrate, and
   a hard coat layer directly, or through another layer, on a surface of the plastic substrate, wherein
   the hard coat layer comprises a filler component comprising chain-like inorganic oxide microparticles, and in
   the hard coat layer, a content of the chain-like inorganic oxide microparticles is equal to or greater than 15 mass
   percent and a content of the filler component ranges from greater than 20 mass percent to less than 40 mass
   percent, and
   a layer thickness of the hard coat layer is equal to or greater than 8 μm but equal to or less than 15 μm.

2. The optical article according to claim 1, wherein the filler component further comprises spherical inorganic oxide microparticles.

3. The optical article according to claim 1 or 2, wherein the filler component further comprises a binder component.

4. The optical article according to claim 3, wherein the binder component comprises an organic silicon compound.

5. The optical article according to any of claims 1 to 4, which is an eyeglass lens.

6. A coating liquid, which comprises:

   a filler component comprising chain-like inorganic oxide microparticles, and
   a binder component, wherein
   relative to a total solid component of the coating liquid, a mass ratio of the chain-like inorganic oxide microparticles
   is equal to or greater than 15 percent and a mass ratio of the filler component is greater than 20 percent but is
   less than 40 percent.

7. The coating liquid according to claim 6, which further comprises spherical inorganic oxide microparticles.

8. The coating liquid according to claim 6 or 7, wherein the binder component comprises an organic silicon compound.

9. The coating liquid according to any of claims 6 to 8, which is a hard coating liquid for an eyeglass lens.

Fig. 1

Fig. 2

Fig. 3

Fig. 4

## INTERNATIONAL SEARCH REPORT

| International application No. |
| --- |
| PCT/JP2013/066654 |

**A. CLASSIFICATION OF SUBJECT MATTER**
*G02B1/10*(2006.01)i, *B32B27/20*(2006.01)i

According to International Patent Classification (IPC) or to both national classification and IPC

**B. FIELDS SEARCHED**

Minimum documentation searched (classification system followed by classification symbols)
G02B1/10-1/12, B32B27/20

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2010-120182 A  (Dainippon Printing Co., Ltd.),<br>03 June 2010 (03.06.2010),<br>paragraphs [0025] to [0046], [0084] to [0096], [0180] to [0250]<br>& US 2010/0104858 A1    & CN 101722691 A | 1-4,6-8<br>5,9 |
| X<br>Y | JP 2011-75705 A  (Dainippon Printing Co., Ltd.),<br>14 April 2011 (14.04.2011),<br>paragraphs [0039] to [0041], [0077], [0086], [0100] to [0102], [0128] to [0169]<br>(Family: none) | 1,3,6<br>2,4-5,7-9 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 August, 2013 (12.08.13) | Date of mailing of the international search report<br>20 August, 2013 (20.08.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/066654

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2005-186435 A  (Catalysts & Chemicals Industries Co., Ltd.),<br>14 July 2005 (14.07.2005),<br>paragraphs [0003] to [0004], [0015] to [0057], [0102] to [0182]<br>& US 2005/0116205 A1    & KR 10-2004-0099228 A<br>& CN 1626584 A | 6-9<br>1-5 |
| P,X | JP 2012-173411 A  (Seiko Epson Corp.),<br>10 September 2012 (10.09.2012),<br>claims 1 to 5; paragraphs [0011] to [0033], [0044] to [0045], [0049]; fig. 1 to 2<br>(Family: none) | 1-9 |
| A | JP 2010-120991 A  (Dainippon Printing Co., Ltd.),<br>03 June 2010 (03.06.2010),<br>paragraphs [0026] to [0071], [0149] to [0188]<br>(Family: none) | 1-9 |
| A | JP 2011-33948 A  (Dainippon Printing Co., Ltd.),<br>17 February 2011 (17.02.2011),<br>paragraphs [0019] to [0021], [0091] to [0092]<br>& US 2012/0189828 A1    & WO 2011/016306 A1<br>& TW 201106005 A       & CN 102472842 A<br>& KR 10-2012-0052277 A | 1-9 |

Form PCT/ISA/210 (continuation of second sheet) (July 2009)

**EP 2 866 062 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012137025 A
- JP 2010128423 A
- US 2010134752 A1
- US 8077405 A
- US 2012287394 A1
- US 8432624 B